# EUROPÄISCHE PATENTSCHRIFT

(11) **EP 1 220 772 B1**
(45) Veröffentlichungstag und Bekanntmachung des Hinweises auf die Patenterteilung: **24.11.2004**
(21) Anmeldenummer: 00956286.9
(22) Anmeldetag: 26.07.2000
(51) Int. Cl.: B60T 15/24, B60T 17/18, B60T 13/66

(54) **DRUCKMITTELBETÄTIGTE FAHRZEUGBREMSANLAGE**
HYDRAULIC FLUID BRAKING SYSTEM
SYSTEME DE FREINAGE DE VEHICULE, ACTIONNE PAR UN FLUIDE SOUS PRESSION

(30) Priorität: 30.07.1999 DE 19935979
(43) Veröffentlichungstag der Anmeldung: 10.07.2002
(73) Patentinhaber: KNORR-BREMSE SYSTEME FÜR NUTZFAHRZEUGE GMBH, 80809 München (DE)
(72) Erfinder: WREDE, Jürgen, D-74321 Bietigheim-Bissingen (DE); STUMPE, Werner, D-70374 Stuttgart (DE)
(86) Internationale Anmeldenummer: PCT/EP2000/007156
(87) Internationale Veröffentlichungsnummer: WO 2001/008953

(56) Entgegenhaltungen:
- EP-A- 0 738 640
- EP-A- 0 911 237
- DE-C- 19 933 483

## Beschreibung

### Stand der Technik

Die Erfindung geht aus von einer Fahrzeugbremsanlage nach dem Oberbegriff des Hauptanspruchs.

Aus der EP 0 726 190 A1 ist eine derartige Fahrzeugbremsanlage bekannt und für ein Nutzfahrzeug vorgesehen. Dabei dient ein erster Bremskreis als pneumatisch betätigbarer Hinterachs-Bremskreis für die beiden Räder der Hinterachse und ein zweiter Bremskreis als pneumatisch betätigbarer Vorderacns-Bremskreis für die der Vorderachse. Bei Ausfall des einen Bremskreises soll der andere Bremskreis des Nutzfahrzeuges noch ausreichend verzögern. Die Bremszylinder des Hinterachs-Bremskreises sind jeweils als Kombibremszylinder ausgebildet, die über eine erste Steuerventileinrichtung in Abhängigkeit von einem dem Hinterachs-Bremskreis zugeordneten Steuersignal eines Bremswertgebers mit einem Druckluftspeicher für den Hinterachs-Bremskreis verbindbar sind. Die Bremszylinder des Vorderachs-Bremskreises sind über eine zweite Steuerventileinrichtung in Abhängigkeit von einem dem Vorderachs-Bremskreis zugeordneten Steuersignal des Bremswertgebers mit einem Druckluftspeicher für den Vorderachs-Bremskreis verbindbar. Die zweite Steuerventileinrichtung weist einen mit dem Druckluftspeicher für den Vorderachs-Bremskreis verbundenen ersten Druckeingang und einen mit einem Steuerausgang des Bremswertgebers bzw. Betriebsbremsventils verbundenen zweiten Druckeingang auf, durch welchen ein vom Betriebsbremsventil abgeleiteter Vorderachs-Steuerdruck eingesteuert wird. Die zweite Steuerventileinrichtung weist ferner mit den Bremszylindern der Vorderachse verbundene Druckausgange auf.

Bedingt durch die dynamische Achslastverlagerung bei einem Bremsvorgang muß der größte Teil der Bremskraft von den Vorderrädern autgebracht werden. Bei Nutzfahrzeugen mit hoher Vorderachslast und zumindest zeitweise niedriger Hinterachslast trifft dies in besonderem Maße zu, da wegen ihres kurzen Radstandes und ihrer großen Schwerpunkthöhe im Fall einer Bremsung eine hohe dynamische Achslastverlagerung auftritt. Bei Ausfall des Vorderachs-Bremskreises, beispielsweise durch eine Leckage im Vorderachs-Bremskreis, ist daher nicht mehr sichergestellt, daß die nun von den allein durch die Hinterräder gelieferte Bremskraft ausreicht, um die vom Gesetzgeber vorgeschriebene Verzögerung aufzubringen.

Aus diesem Grund ist bei der bekannten Fahrzeugbremsanlage eine zwischen der zweiten Steuerventileinrichtung und einem Bremszylinder des rechten Vorderrades angeordnete Umschaltventileinrichtung vorgesehen, die bei Ausfall des Vorderachs-Bremskreises Druckmittel aus dem vom Vorderachs-Bremskreis unabhängigen Druckluftspeicher zu diesem Bremszylinder schaltet, um dort als Ersatz für den ausgefallenen Vorderachs-Bremsdruck zu dienen. Unbefriedigend bei diesem Stand der Technik ist jedoch, daß sich durch diesen asymmetrischen Schaltungsaufbau unterschiedliche Strömungswiderstände für die Achsseiten der Vorderachse ergeben, die bei einer intakten Bremsung dort zu dynamisch ungleichen Bremsdruckverläufen führen. Unbefriedigend ist ferner, dass zur Betätigung ein Bremswertgeber mit wenigstens zwei Kanälen zur Aussteuerung der entsprechenden Steuerdrücke erforderlich ist.

Aus der DE 19746342 A1 (EP 0 911 237 A2) ist eine Druckmittelbetätigte Fahrzeugbremsanlage bekannt, die es ermöglicht, in den Bremszylinder, welchem die zusätzlichen Steuerventileinrichtung zugeordnet ist, auch dann Druck einzusteuern, wenn der Bremswertgeber nicht betätigt wird. Diese Druckmittelbetätigte Fahrzeug-Bremsanlage ist im allgemeinen in einen der Hinterachse des Fahrzeugs zugeordneten ersten Bremskreises (I) und einen der Vorderachse des Fahrzeugs zugeordneten zweiten Bremskreises (II) unterteilt. Sowohl dem ersten Bremskreis I als auch dem zweiten Bremskreis II sind je zwei Bremszylinder und je eine Steuerventileinrichtung zugeordnet, über welche die Bremszylinder in Abhängigkeit von einem Steuerdruck mit einer dem jeweiligem Bremskreis zugeordneten Druckmittelquelle oder mit einer Druckmittelsenke verbindbar sind. Um zu verhindern, dass bei einem Defekt in dem einen Bremskreis, z. B. dem als Vorderachs-Bremskreis dienenden zweien Bremskreis II, beide Bremszylinder drucklos werden, und um einen Bremszylinder der Vorderachse als zusätzliche Feststellbremse nutzen zu können, ist eine zusatzliche Steuerventileinrichtung vorgesehen, die zwischen dem Druckmittelausgang der diesen beiden Bremszylindern zugeordneten Steuerventileinrichtung und dem einen der beiden Bremszylinder angeordnet ist und über die der eine Bremszylinder in Abhängigkeit von einem Steuersignal eines Handbremsventils mit einer von der Druckmittelquelle des zweiten Bremskreises II unabhängigen Druckmittelquelle oder mit dem Druckmittelausgang der an den beiden Bremszylindern zugeordneten Steuerventileinrichtung verbindbar ist.

### Vorteile der Erfindung

Die erfindungsgemäße druckmittelbetätigte Fahrzeugbremsanlage hat demgegenüber den Vorteil, dass sich bei einer intakten Bremsung aufgrund der Schaltung der erfindungsgemäßen Umschaltventileinrichtung auf der Zuströmseite der zweiten Steuerventileinrichtung symmetrische Strömungswiderstande für beide Achsseiten der Vorderachse ergeben, während bei einem Ausfall des Vorderachs-Bremskreises die Hilfsbremswirkung durch Umschalten auf einen vom Vorderachs-Bremskreis unabhängigen Druckluftspeicher zumindest einem Bremszylinder der Vorderachse zuführbar ist. Zudem ist aufgrund der Ansteuerung über die dritte Steuerventileinrichtung lediglich ein pneumatisch einkanaliger Bremswertgeber erforderlich.

Weitere vorteilhafte Weiterbildungen und Ausgestaltungen der Erfindung ergeben sich durch die in den Unteransprüchen aufgeführten Maßnahmen.

### Zeichnungen

Ausführungsbeispiele der Erfindung sind in der nachfolgenden Beschreibung und in den Zeichnungen näher erläutert. Letztere zeigen in Fig. 1 einen schematischen Schaltplan einer ersten Ausführungsform der druckmittelbetätigten Fahrzeugbremsanlage mit der erfindungsgemäßen Umschaltventileinrichtung. Fig. 2 zeigt ebenfalls als schematischen Schaltplan eine zweite Ausführungsform gemäß der Erfindung. Fig. 3 zeigt eine dritte Ausführungsform. Fig. 4 zeigt eine vierte Ausführungsform der erfindungsgemäßen Umschaltventileinrichtung. Fig. 5 zeigt eine fünfte Ausführungsform und Fig. 6 eine sechste Ausführungsform.

### Beschreibung der Ausführungsbeispiele

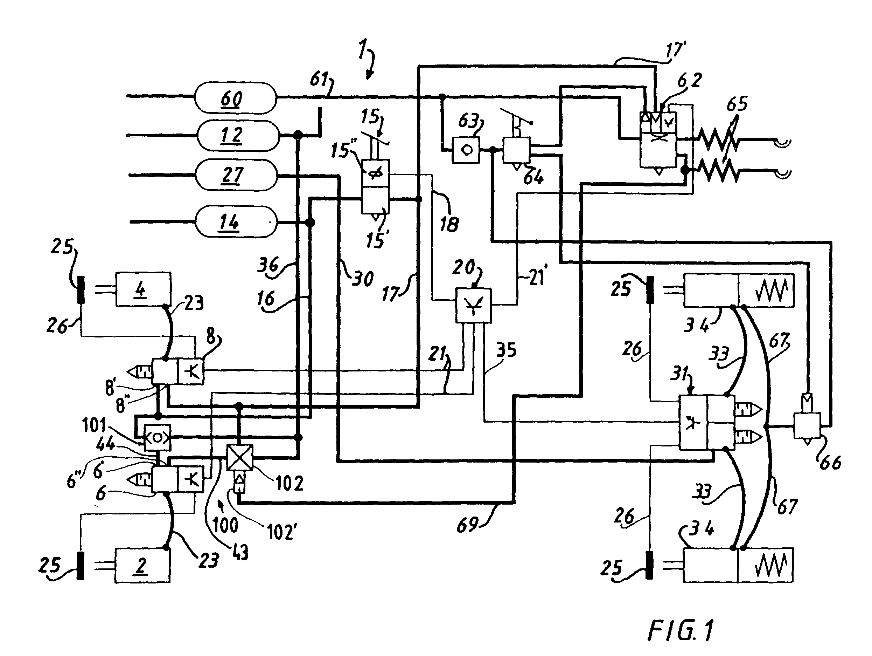

Die in Fig. 1 in ihrer Gesamtheit mit 1 bezeichnete druckmittelbetätigte Fahrzeugbremsanlage ist eine elektronisch geregelte Bremsanlage für Nutzfahrzeuge mit vorrangigen elektro-pneumatischen Bremskreisen und mit nachrangigen pneumatischen Rückhaltkreisen als unterlegte Sicherheitsebene.

Bei der elektronisch geregelten Bremsanlage 1 sind die Vorderachsbremsen durch einen Bremszylinder 2 des linken Vorderrades und einen Bremszylinder 4 des rechten Vorderrades repräsentiert, weiche jeweils von einem Einkanal-Druckregelmodul 6, 8 angesteuert sind. Die Druckregelmodule 6, 8 der Vorderachse sind mit ihren ersten Druckeingängen 6', 8' über eine Umschaltventileinrichtung 100 mit Druckluftspeichern 12 oder 14 verbindbar.

Der Druckluftspeicher 14 ist der Vorderachse zugeordnet und steht ferner über eine Vorratsdruckleitung 16 mit einem Vorderachskanal 15' des Betriebsbremsventils 15 in Verbindung, um in Abhängigkeit von der Kraft, mit weicher der Fahrer das Steuerpedal betätigt, proportionale Steuerdrucksignale in eine Steuerdruckleitung 17 der Vorderachse einzusteuern.

Zusätzlich wird bei Betätigung des Betriebsbremsventils 15 in einem elektrischen Teil 15" des Betriebsbremsventils 15 ein proportionales elektrisches Steuersignal erzeugt und über eine elektrische Leitung 18 an eine zentrale elektronische Steuereinheit 20 geleitet, welche mittels je einer elektriscnen Steuerleitung 21 ein Druckregelmodul 6, 8 der Vorderachse ansteuert. In Abhängigkeit von den elektrischen Steuersignalen wird in den Druckregelmodulen 6, 8 der Vorderachse in bekannter Weise ein modulierter Steuerdruck erzeugt und über pneumatische Bremsdruckleitungen 23 in die Bremszylinder 2, 4 eingesteuert. Der Druckluftspeicher 14 für die Vorderachse, der elektrische Teil 15" des Betriebsbremsventils 15, die zentrale elektronische Steuereinheit 20, die elektrischen Steuerleitungen 21, die beiden Druckregelmodule 6, 8, die Bremsdruckleitungen 23 und die Bremszylinder 2, 4 bilden zusammen einen elektro-pneumatischen Vorderachs-Bremskreis.

Die Schaltungslogik der Druckregelmodule 6, 8 behandelt die elektrischen Steuersignale des elektro-pneumatischen Vorderachs-Bremskreises vorrangig vor den über die Steuerdruckleitung 17 eingesteuerten Steuerdrucksignalen eines pneumatischen Vorderachs-Bremskreises, welcher als Rückhalt-Bremskreis eine redundante Steuerfunktion ausübt, wenn der elektro-pneumatische Vorderachs-Bremskreis gestört ist. Der elektro-pneumatische Vorderachs-Bremskreis überschneidet sich teilweise mit dem pneumatischen Vorderachs-Bremskreis, der den Druckluftspeicher 14 für die Vorderachse, den Vorderachskanal 15' des Betriebsbremsventils 15, die Steuerdruckleitung 17, die beiden Druckregelmodule 6, 8, die Bremsdruckleitungen 23 und die beiden Bremszylinder 2, 4 umfaßt.

Die beiden Druckregelmodule 6, 8 der Vorderachse ermöglichen neben der Regelung des Bremsdruckes durch integrierte ABS (Anti-Blockier-System) - Funktionen eine individuelle Anpassung des Bremsdruckes an das Drehverhalten der gebremsten Vorderräder, welches von radbezogenen Drehzahlsensoren 25 gemessen und mittels elektrischer Leitungen 26 an die Druckregelmodule 6, 8 geleitet wird.

Für die Hinterachse ist ein eigener Druckiuftspeicher 27 vorgesehen, welcher durch eine Vorratsdruckleitung 30 mit einem zweikanaligen Druckregelmodul 31 der Hinterachse in Verbindung steht, wobei je ein Kanal für ein Hinterrad vorgesehen ist.

Das Druckregelmodul 31 der Hinterachse steht über pneumatische Bremsdruckleitungen 33 mit Kombibremszylindern 34 des rechten und linken Hinterrades in Verbindung, wobei die vom Betriebsbremsventil 15 über die elektrischen Leitung 18 an die zentrale elektronische Steuereinheit 20 ausgesteuerten elektrischen Signale mittels einer elektrischen Steuerleitung 35 in das Druckregelmodul 31 der Hinterachse eingesteuert werden.

In Abhängigkeit der von der zentralen elektronischen Steuereinheit 20 über die elektrischen Steuerleitungen 21, 35 herangeführten elektrischen Steuersignale werden in den Druckregelmodulen 6, 8, 31 der Vorderachse und der Hinterachse aus den über die Vorratsdruckleitungen 16, 30 herangeführten Vorratsdrücken jeweils achsweise die Bremsdrücke erzeugt, welche jeweils an einem Druckausgang eines Druckregelmoduls 6, 8, 31 anstehen und über die pneumatischen Bremsdruckleitungen 23, 33 in die nachgeschalteten Bremszylinder 2, 4 bzw. Kombibremszylinder 34 eingesteuert werden.

Für ein Anhängefahrzeug ist ein weiterer eigener Druckluftspeicher 60 vorgesehen, welcher über eine Vorratsdruckleitung 61 mit einem Anhängersteuermodul 62 in Verbindung steht; ein Zweig dieser Vorratsdruckleitung 61 führt über ein zwischengeschaltetes Rückschlagventil 63 und eine nachgeordnete Feststellbremse 64 zu einem Steuereingang des Anhängersteuermoduls 62, welches druckausgangsseitig an zwei jeweils zur nicht dargestellten Bremsanlage des Anhängefahrzeugs führenden Rohrwendeln 65 angeschlossen ist. Ein ebenfalis druckausgangsseitig der Feststellbremse 64 angeschlossenes Relaisventil 66 steuert in Abhängigkeit von einem steuerkammerseitig zugeführten stationären Druck aus dem Druckluftspeicher 60 entsprechend gestuften Druck über zusätzliche Bremsieltungen 67 in die Hinterachs-Kombibremszylinder 34 ein. Da der Vorderachskanal 15' des Betriebsbremsventils 15 über einen Zweig 17' der Rückhalt-Steuerdruckleitung 17 mit dem Anhängersteuermodul 62 verbunden ist, wird bei Betätigung des Betriebsbremsventils 15 im Zugfahrzeug auch vom Anhängersteuermodul 62 DrucK ausgesteuert. Bei Betätigung der Feststellbremse 64 werden im Zugfahrzeug in Kombibremszylindern 34 der Hinterachse vorgesehene Federspeicherzylinder betätigt und gleichzeitig ein Bremsdruck zum Anhängefahrzeug ausgesteuert. Das Anhängerstermodul 62 ist wie die Druckregelmodule 6, 8 über eine elektrische Leitung 21' von der zentralen elektronischen Steuereinheit 20 elektrisch ansteuerbar.

Die mit ihren Druckausgängen an die Druckregelmodule 6, 8 angeschlossene Umschaltventileinrichtung 100 umfaßt in einer ersten Ausführungsform ein Wechselventil 101, das mit seinem ersten Druckeingang über die Vorratsdruckleitung 16 mit dem Druckluftspeicher 14 und mit seinem zweiten Druckeingang über eine Vorratsdruckleitung 36 mit dem als Hilfsspeicher dienenden Drucklutspeicher 12 verbunden ist, und ein Relaisventil 102, dessen erster Druckeingang an die Steuerdruckleitung 17 und somit an den Vorderachs-Rückhaltkreis angeschlossen ist, während ein zweiter Druckeingang gemeinsam mit dem zweiten Druckeingang des Wechselventils 101 mit dem Hilfsspeicher 12 verbunden ist. Ferner weist das Relaisventil 102 einen mittels einer pneumatischen Steuerdruckleitung 69 an einen Druckausgang des Anhängersteuermoduls 62 angeschlossenen Steueranschluß 102' auf und steht mit seinem Druckausgang über eine Druckleitung 43 mit dem zweiten Druckeingang 6'' des Druckregelmoduls 6 in Verbindung. Im übrigen ist die zum ersten Druckeingang des Wechselventils 101 führende Vorratsdruckleitung zusätzlich an den ersten Druckeingang 8' des Druckregelmoduls 8 angeschlossen, während die zum ersten Druckeingang des Relaisventils 102 führende Steuerdruckleitung 17 des Vorderachs-Rückhaltkreises zusätzlich an den zweiten Druckeingang 8" des Druckregelmoduls 8 angeschlossen ist. Druckausgangsseitig ist das Wechselventil 101 mit dem ersten Druckeingang 6' des Druckregelmoduls 6 verbunden.

Somit ergibt sich bei einer über das Betriebsbremsventil 15 eingeleiteten Bremsung für die Umschaltventileinrichtung gemäß der In Fig. 1 veranschaulichten ersten Ausführungsform folgende Funktionsweise: Treten im Vorderachs-Bremskreis, insbesondere in der Leitung 16 keine Druckveriuste auf, so steht der Vorratsdruck aus dem Druckluftspeicher 14 über die Leitung 16 einerseits am ersten Druckeingang 8' des Druckregelmoduls 8 und andererseits an dem ersten Druckeingang des Wechselventils 101 der Umschaltventileinrichtung 100 an, während an dem zweiten Druckeingang des Wechselventils 101 der Vorratsdruck aus dem als Hilfsspeicher dienenden Druckluftspeicher 12 ansteht. Dabei ist das Wechselventil 101 derart ausgebildet, daß bei etwa gleich großen Drücken der erste Druckeingang um ein Druckmaß Δp bevorrechtigt ist, so daß der Vorratsdruck aus dem Druckluftspeicher 14 am Druckausgang des Wechselventils 101 durchgeschaltet ist und somit über die Leitung 44 an dem ersten Druckeingang 6' des Druckregelmoduls 6 ansteht. Bei Betätigung des Betriebsbremsventils 15 wird die Steuerdruckleitung 17 des Rückhalt - Bremskreises mit einem Steuerdruck p_{VA} beaufschlagt, der sowohl an dem als Wirkfläche ausgebildeten ersten Druckeingang des Relaisventils 102 als auch an den zweiten Druckeingang 8" des Druckregermoduls 8 gelangt. Demgegenüber steht am zweiten Druckeingang des Relaisventils 102 der von dem Hilfsspeicher über die Vorratsdruckleitung 36 zugeführte stationäre Druck an. Da an dem als weitere Wirkfläche ausgebildeten Steuereingang des Relaisventils 102 der Anhängersteuerdruck ansteht, wird aufgrund der zwischen den beiden Wirkflächen bestehenden und zugunsten des ersten Druckeingangs wirkenden Druckdifferenz somit der erste Druckeingang auf den Druckausgang des Relaisventils 102 durchgeschaltet, so daß an dem Druckausgang des Relaisventils 102 der Vorderachs-Rückhaltdruck p_{VA} gelangt und dem zweiten Druckeingang 6'' des Druckregelmoduls 6 zugeführt wird. Somit steht an den jeweils ersten Druckeingängen 6', 8' der Druckregelmodule 6, 8 der stationäre Vorderachs-Druck aus dem Druckluftspeicher 14 an, während an den jeweils zweiten Druckeingängen 6'', 8'' der Druckregelmodule 6, 8 als Steuerdruck der Rückhalt-Steuerdruck p_{VA} ansteht.

Bei Druckabfall im pneumatischen Vorderachs-Bremskreis während einer Bremsung, beispielsweise durch einen Riß oder eine Leckage in der Vorratsdruckleitung 16, sinkt der Druck am ersten Druckeingang des Wechselventils 101 gegenüber dem stationären Druck aus dem Hilfsspeicher 12 an dem zweiten Druckeingang des Wechselventils 101 ab, so daß nunmehr der Vorratsdruck aus dem Hilfsspeicher 12 auf den Druckausgang des Wechselventils 101 durchgeschaltet wird und somit an dem ersten Druckeingang 6' des Druckregelmoduls 6 anstent, während demgegenüber am dazu korrespondierenden Druckeingang 8' des Druckregelmoduls 8 der gegen einen Restwert hin absinkende Druck aus dem Vorderachs-Druckluftspeicher 14 ansteht. Aufgrund des Druckabfalls im Vorderachs-Bremskreis sinkt jedoch auch der Steuerdruck des Vorderachs-Rückhaltkreises in der zum ersten Druckeingang des Relaisventils 102 führenden Steuerdruckleitung 17 ab; dadurch steht an der diesem Druckeingang zugeordneten Wirkfläche kein ausreichend ausgesteuerter Steuerdruck an, so daß nunmehr das Relaisventil 102 diesen Druckeingang absperrt und gleichzeitig den mit dem Hilfsspercher 12 in Verbindung stehenden zweiten Druckeingang auf den Druckausgang durchschaltet. An dem mit dem Druckausgang des Relaisventils 102 verbundenen zweiten Druckeingang 6" des Druckregelmoduls 6 wird somit ein vom Hilfsspeicher 12 zugeführter Hilfsdruck eingesteuert, während an dem dazu korrespondierenden an die Steuerdruckleitung 17 angeschlossenen zweiten Druckeingang 8" des Druckredelmoduls 8 lediglich der gegen einen Restwert hin konvergierende Restdruck aus dem vorderachs - Druckluftspeicher 14 ansteht.

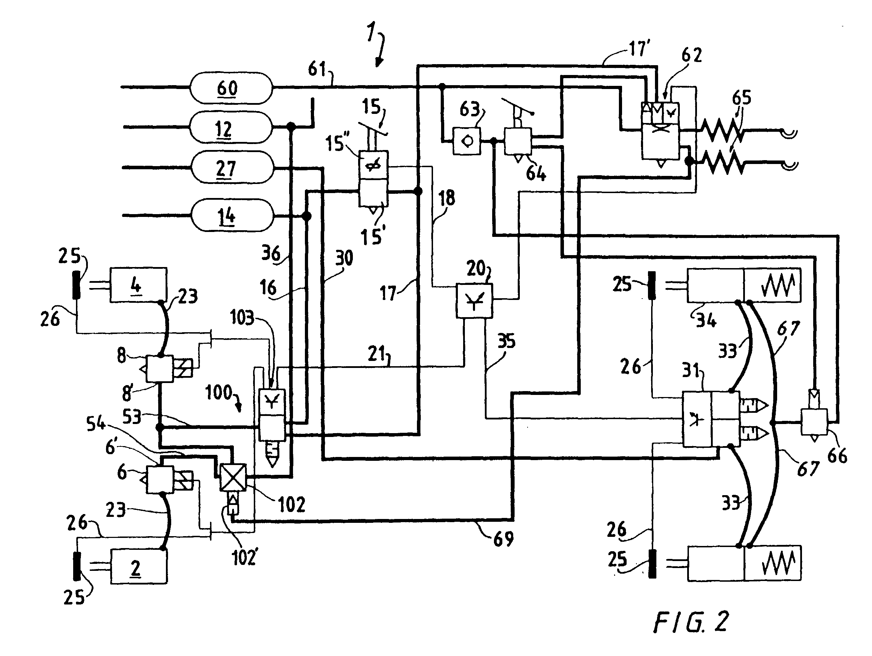

In Fig. 2 ist eine zweite Ausführungsform der erfindungsgemäßen Umschaltventileinrichtung 100 veranschaulicht; gegenüber der ersten Ausführungsform unterscheidet sich die zweite Ausführungsform dadurch, daß das Relaisventil 102 und ein dazu vorgeschaltetes Druckregelmodul 103 vorgesehen ist, so daß zur Ansteuerung der Vorderachs - Bremszylinder 2, 4 anstatt der beiden Druckregelmodule 6, 8 zwei kostengünstigere Drucksteuerventile angeordnet sind, welche mit ihren jeweiligen Druckausgängen über die Bremsleitungen 23 mit den Bremszylindern 2, 4 verbunden sind. Das Druckregelmodul 103 steht mit seinem ersten Druckeingang über die Vorratsdruckleitung 16 mit dem Vorderachs - Druckluftspeicher 14 in Verbindung und ist mit seinem zweiten Druckeingang an die Steuerleitung 17 des Rückhaltkreises angeschlossen. Druckausgangsseitig ist das Druckregelmodul 103 über eine pneumatische Verbindungsleitung 53 einerseits mit einem Druckeingang 8' des dem rechten Vorderachs-Bremszylinder 4 zugeordneten Drucksteuerventils 8 und andererseits mit dem ersten Druckeingang des Relaisventils 102 verbunden; der zweite Druckeingang steht mittels der Vorratsdruckleitung 36 mit dem Hilfsspeicher 12 in Verbindung und der Steueranschluß 102' ist über die Steuerleitung 69 an den Druckausgang des Anhängersteuermoduls 62 angeschlossen. Zur Ansteuerung des Druckeingangs des dem linken Vorderachs-Bremszylinder 2 zugeordneten Drucksteuerventils 6 ist der Druckausgang des Relaisventils 102 über die Verbindungsleitung 54 mit dem Druckeingang 6' des Drucksteuerventils 6 verbunden. Dadurch ergibt sich bei einer intakten Bremsung folgende Funklionsweise. Da im Vorderachs-Bremskreis keine Druckverluste auftreten und somit am ersten Druckeingang des Druckregelmoduls 103 der vom Vorderacns-Drucklurtspeicher 14 zugeführte Vorratsdruck und an dessen zweiten Druckeingang der uber die Leitung 17 zugeführte Rückhaltsteuerdruck p_{VA} ansteht, steuert das Druckregelmodul 103 druckausgangsseitig einen vom Rückhaltsteuerdruck p_{VA} funktional abhängigen Vorderachs-Vorratsdruck aus, der einerseits dem Druckeingang des Drucksteuerventils 8 und andererseits dem ersten Druckeingang des Relaisventils 102 zugeführt wird. Damit wird der erste Druckeingang des Relaisventils 102 auf dessen Druckausgang durchgeschaltet, so daß dem zugeordneten Druckeingang des Drucksteuerventils 6 Druckmittel aus dem Vorderachs-Druckluftspeicher 14 zugeführt werden. Treten jedoch im Vorderachs-Bremskreis Druckverluste auf, so kommt es an beiden Druckeingängen des vorgeschalteten Druckregelmoduls 103 jeweils zu einem Druckabfall, so daß das Druckregelmodul 103 an seinem Druckausgang keinen ausreichenden Druck aussteuert. Dadurch gelangt jedoch weder an den Druckeingang des Drucksteuerventils 8 noch an den ersten Druckeingang des Relaisventils 102 ein ausreichender Druck, so daß das Relaisventil 102 seinen Druckausgang auf den zweiten Druckeingang umschaltet, wobei nunmehr der aus dem Hilfsspeicher 12 zugeführte Druck auf den Druckausgang und somit auf den Druckeingang des zugeordneten Drucksteuerventils 6 gelangt.

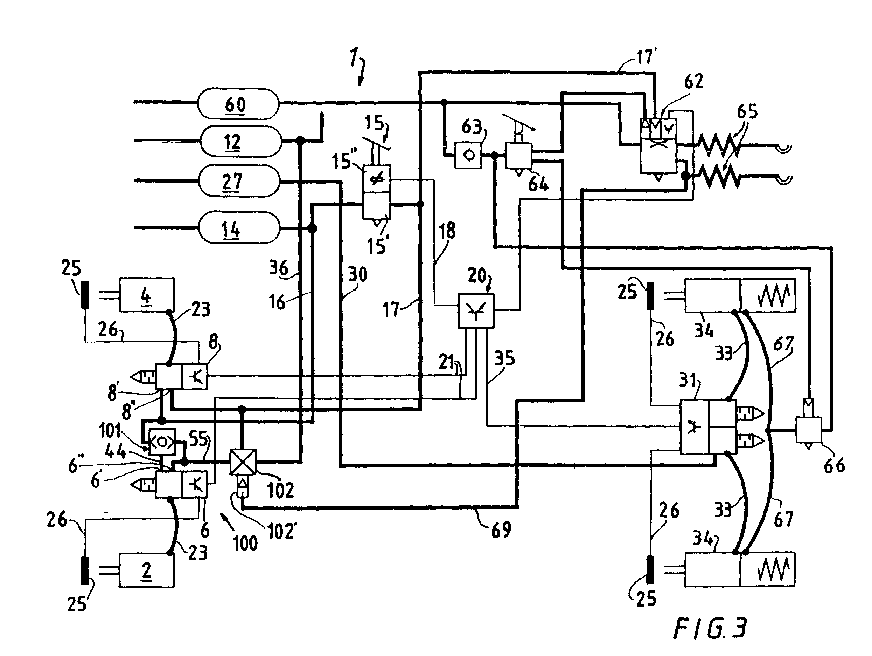

In Fig. 3 ist eine dritte Ausführungsform der erfindungsgemäßen Umschaltventileinrichtung 100 veranschaulicht, die wie die erste Ausführungsform ein Wechselventil 101 und ein Relaisventil 102 umfaßt und sich von der ersten Ausführungsform durch eine demgegenüber modifizierte pneumatische verschaltung unterscheidet. Dazu ist der zum Vorderachskanal 15' des Betriebsbremsventils 15 führende Vorderachs - Druckluftspeicher 14 über die Vorratsdruckleitung 16 wie bei der ersten Ausführungsform mittels eines zusätzlichen Zweigs der Leitung 16 einerseits mit dem ersten Druckeingang 8' des Druckregelmoduls 8 und andererseits mit dem ersten Druckeingang des Wechselventils 101 verbunden, wahrend die Steuerdruckleitung 17 des Rückhaltkreises einerseits an den ersten Druckeingang des Relaisventils 102 und andererseits an den zweiten Druckeingang 8'' des Druckregelmoduls 8 angeschlossen ist; der zweite Druckeingang des Relaisventils 102 steht über die Leitung 36 mit dem Hilfsspeicher 12 in Verbindung, wobei der Steueranschluß 102' des Relaisventils 102 weiterhin an das Anhängersteuermodul 62 pneumatisch angeschlossen ist. Druckausgangsseitig ist das Relaisventil 102 mittels der Leitung 55 mit dem zweiten Druckeingang des Wechselventils 101 und dem zweiten Druckeingang 6" des Druckregelmoduls 6 verbunden, während dessen erster Druckeingang 6' mit dem Druckausgang des Wechselventils 101 in Verbindung steht. Da die Ansteuerung der Umschaltventileinrichtung in gleicher Weise wie bei der ersten Ausführungsform erfolgt, ergibt sich folgende Funktionsweise fur die in Fig. 3 veranschaulichte dritte Ausführungsform der Umschaltventileinrichtung 100: Treten im Vorderachs-Bremskreis keine Druckverluste auf, so steht der vorratsdruck aus dem Druckluftspeicher 14 gemeinsam am ersten Druckeingang 8' des Druckregelmoduls 8 und am ersten Druckeingang des Wechselventils 101 an: bei Betätigung des Betriebsbremsventils 15 wird die Steuerdruckleitung 17 mit einem Steuerdruck p_{VA} beaufschlagt, der gemeinsam am zweiten Druckeingang 8" des Druckregelmoduls 8 und am ersten Druckeingang des Relaisventils 102 ansteht. Da das Relaisventil 102 den ersten Druckeingang auf seinen Druckausgang duchschaltet, gelangt der Druck p_{VA} einerseits an den zweiten Druckeingang 6" des Druckregelmoduls 6 und andererseits an den zweiten Druckeingang des Wechselventils 101. Wegen der zugunsten des ersten Druckeingangs des Wechselventils 101 wirkenden Druckdifferenz wird dieser Druckeingang auf dessen Druckausgang durchgeschaltet, so daß am daran angeschlossenen ersten Druckeingang 6' des Druckregelmoduls 6 der stationäre Vorratsdruck aus dem Druckluftspeicher 14 ansteht.

Bei Druckabfall im pneumatischen Vorderachs-Bremskreis während einer Bremsung, sinkt der Druck aus dem Druckluftspeicher 14 sowohl am ersten Druckeingang des Wechselventils 101 als auch am ersten Druckeingang des Relaisventils 102 sowie an den zugeordneten Druckeingängen 6', 6" des Druckregelmoduls 6 ab, so daß nunmehr das Relaisventils 102 seinen zweiten Druckeingang auf den Druckausgang durchschaltet, wobei dadurch ein vom Hilfsspeicher 12 über die Vorratsdruckleitung 36 zugeführter Hilfsdruck zum zweiten Druckeingang des Wechselventils 101 und zum zweiten Druckeingang 6" des Druckregelmoduls 6 gelangt. Aufgrund der nunmehr zugunsten des zweiten Druckeingangs des Wechselventils 101 wirkenden Druckdifferenz erfolgt ein Umschalten des Wechselventils 101, bei dem dessen zweiter Druckeingang mit dem Druckausgang verbunden wird, so daß am Druckausgang der vom Hilfsspeicher 12 herrührende Druck an den zugeordneten Druckeingang 6' des Druckregelmoduls 6 gelangt. Der Hilfsdruck aus dem Hilfsspeicher 12 wird somit bei dieser Ausführungsform nur einem Druckregelmodul 6 zugeführt und in den korrespondierenden Bremszylinder des linken Vorderrades eingespeist.

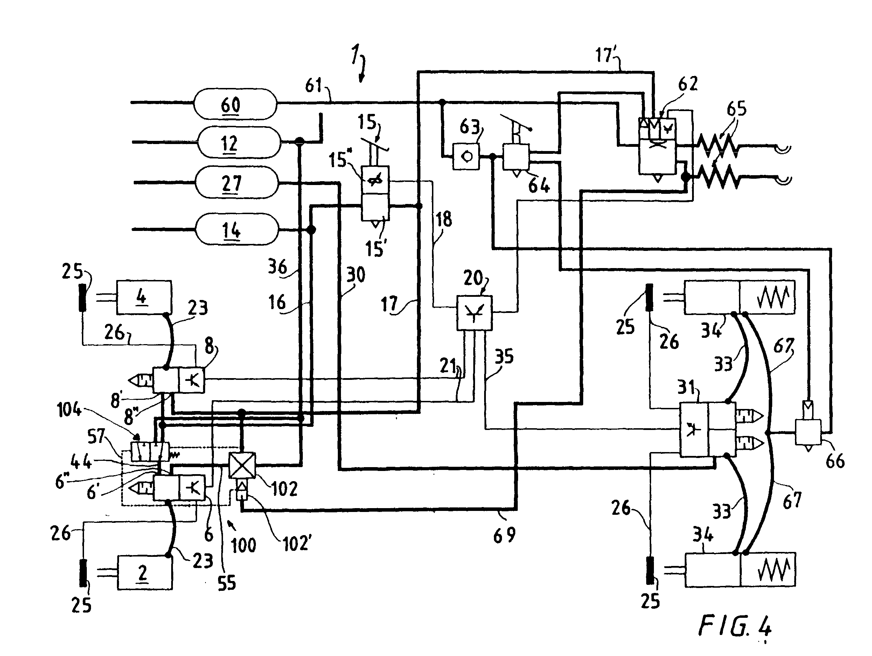

Fig. 4 zeigt eine vierte Ausführungsform der erfindungsgemäßen Umschaltventiieinrichtung 100, welche sich von der ersten Ausführungsform dadurch unterscheidet, daß anstatt eines Wechselventils ein 3/2-Wegeventil vorgesehen ist, so daß die vierte Ausführungsform ein Relaisventil 102 und ein pneumatisch schaltbares federbelastetes 3/2 - Wegeventil 104 umfaßt. Ein erster Eingang des 3/2 - Wegeventils 104 ist gemeinsam mit dem ersten Druckeingang 8' des Druckregelmoduls 8 über die Vorratsdruckleitung 16 mit dem Druckluftspeicher 14 verbunden, während ein zweiter Eingang des Ventils 104 mit der zum Hilfsspeicher 12 führenden Vorratsdruckleitung 36 verbunden ist. Desweiteren ist das 3/2-Wedeventil 104 mit einem ersten Steuereingang an die die pneumatischen Steuerdrucksignale des Vorderachs - Rückhaltbremskreises führende Verbindungsleitung 17 angeschlossen und steht mit einem zweiten Steuereingang über eine Leitung 57 mit dem Steueranschluß 102' des Relaisventils 102 in Verbindung. In seiner Ruhestellung sperrt das 3/2-Wegeventil 104 seinen zweiten Druckeingang ab und verbindet gleichzeitig seinen ersten Druckeingang mit dem Ausgang, während in seiner zweiten Stellung der erste Druckeingang abgesperrt ist und der zweite Druckeingang mit dem Ausgang verbunden ist, wobei dieser Ausgang über die Leitung 44 mit dem ersten Druckeingang 6' des Druckregelmoduls 6 in Verbindung steht. Ferner ist der Steuerdruckleitung 17 des Rückhaltkreises mit einem Zweig an den zweiten Druckeingang 8" des Druckregelmoduls 8 und mit einem anderen Zweig an den ersten Druckeingang des Relaisventils 102 angeschlossen, wobei ein weiterer Zweig der Steuerdruckleitung 17 zum ersten Steuereingang des 3/2 - Wegeventils führt. Demgegenüber ist der zweite Druckeingang des Relaisventils 102 an einen Zweig der zum Hilfsspeicher 12 führenden Vorratsdruckleitung 36 angeschlossen. Zur pneumatischen Ansteuerung ist der Steueranschluß 102' des Relaisventils 102 über die Leitung 69 an das Anhängersteuermodul 62 angeschlossen, während der Druckausgang des Relaisventils 102 über die Leitung 55 zum zweiten Druckeingang 6" des Druckregelmoduls 6 führt.

Bei intaktem Vorderachs-Bremskreis bleibt das 3/2-Wegeventil 104 aufgrund der zugunsten des ersten Steuereingangs wirkenden Druckdifferenz in seiner Ruhestellung, so daß der an seinem ersten Druckeingang anstehende vom Vorderachs-Druckluftspeicher 14 zugeführte Druck auf seinen Druckausgang durchgeschaltet ist und somit in den ersten Druckeingang 6' des Druckregelmoduis 6 eingespeist wird. Bei Betätigung des Betriebsbremsventils 15 wird die Steuerdruckleitung 17 des Rückhaltkreises mit einem Steuerdruck p_{VA} beaufschlagt, der sowohl an den ersten Druckeingang des Relaisventils 102 als auch an den zweiten Druckeingang 8" des Druckregelmoduls 8 gelangt. Gegenüber dem vom Anhängersteuermodul 62 in den Steueranschluß 102' des Relaisventils 102 eingespeisten Steuerdruck, der als Referenzwert zum am ersten Druckeingang des Relaisventils 102 anstehenden Vorderachsdruck fungiert, wirkt sich die dadurch definierte Druckdifferenz zugunsten des ersten Druckeingangs aus, so daß der vom Vorderachs-Drucklurtspeicher 14 herrührende Druck auf den Druckausgang des Relaisventils 102 durchgeschaltet und in den zweiten Druckeingang 6" des Druckregelmoduls 6 eingesteuert wird. Damit steht an den ersten Druckeingängen 6', 8' der Druckregelmodule 6, 8 der Druck aus dem Druckluftspeicher 14 an, während an die zweiten Druckeingängen 6", 8" der über die Steuerdruckleitung 17 zugeführte Steuerdruck p_{VA} gelangt. Bei Druckabfall im pneumatischen Vorderachs-Bremskreis sinkt der vom Vorderachs-Druckluftspeicher 14 an den ersten Druckeingang 8' des Druckregelmoduls 8 und an den ersten Druckeingang des 3/2 - Wegeventil 104 zugeführte Druck ab. Ferner sinkt auch der vom Betriebsbremsventil 15 über die Steuerdruckleitung 17 einerseits in den ersten Druckeingang des Relaisventils 102 und andererseits in den ersten Steuereingang des 3/2 - Wegeventils 104 eingesteuerte Steuerdruck p_{VA} ab; bei Unterschreiten des jeweils als Referenzdruckwert am zweiten Steuereingang des 3/2-Wegeventils 104 sowie am Steueranschluß 102' des Relaisventils 102 eingespeisten Anhängersteuerdrucks schalten sowohl das 3/2-Wegeventil 104 als auch das Relaisventil 102 aus ihrer Ruhestellung in ihren jeweils angeren Schaltzustand um, wobei nunmehr am Ausgang des 3/2-Wegeventils 104 und am Ausgang des Relaisventils 102 jeweils der vom Hilfsspeicher 12 herrührende Hilfsdruck ansteht. Damit wird auch in die zugeordneten Druckeingänge 6', 6" des Druckregelmoduls 6 dieser Hilfsdruck eingespeist, während an den dazu korrespondierenden Druckeingängen 8', 8'' des anderen Druckregelmoduls 8 ein jeweils gegen einen Restdruck konvergierender Vorderachsdruck bzw Steuerdruck p_{VA} ansteht.

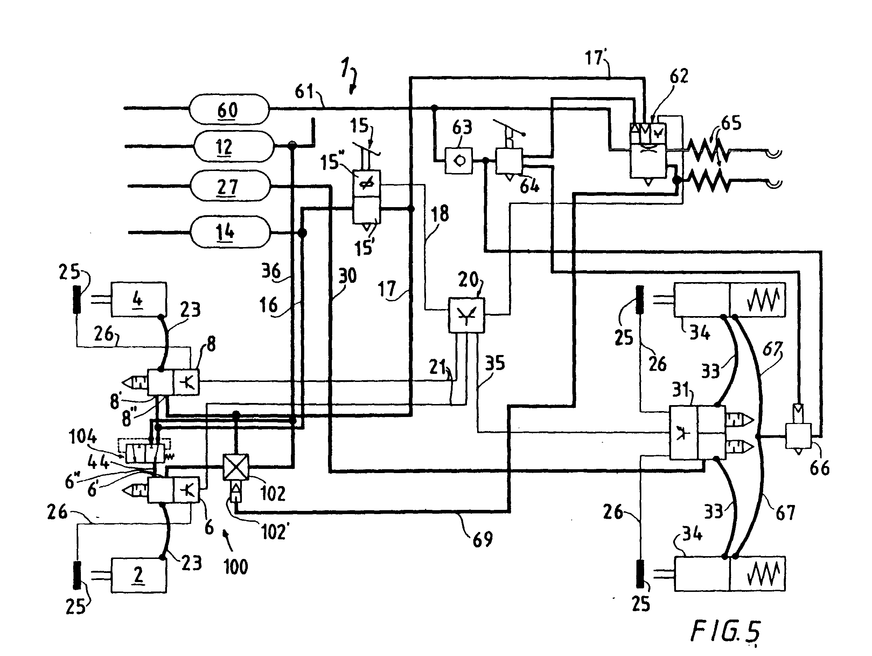

Fig. 5 zeigt eine fünfte Ausführungsform der erfindungsgemäßen Umschaltventileinrichtung 100, die wie die vierte Ausführungsform ein Relaisventil 102 sowie ein pneumatisch schaltbares federbelastetes 3/2-Wegeventil 104 umfaßt und sich von der vierten Ausführungsform lediglich durch eine demgegenüber modifizierte pneumatische Ansteuerung der beiden Steuereingange des 3/2-Wegeventils unterscheidet, indem der erste Steuereingang an einen Zweig der zum Vorderachs- Druckluftspeicher 14 führenden Vorratsdruckleitung 16 und der zweite Steuereingang an einen Zweig der zum Hilfsspeicher 12 führenden Vorratsdruckleitung 36 angeschlossen ist. Bei dieser fünften Ausführungsform ist der Umschaltschwellenwert durch entsprechende Dimensionierung der druckbeaufschlagten Wirkflächen und der Federkräfte vorbestimmbar. Im übrigen stimmt die pneumatische Verschaltung mit derjenigen der vierten Ausführungsform überein. Damit ergibt sich folgende Funktionsweise:

Bei intaktem Vorderachs-Bremskreis bleibt das 3/2-Wegeventil 104 in seiner Ruhestellung, wobei der an seinem ersten Druckeingang anstehende vom Vorderachs-Druckluftspeicher 14 zugeführte Druck auf seinen Druckausgang durchgeschaltet ist und somit in den zugeordneten ersten Druckeingang 6' des Druckregelmoduls 6 eingespeist wird. Am zweiten Druckeingang 6'' steht der über den Ausgang des Relaisventils 102 ausgesteuerte Rückhaltdruck p_{VA} an während in den dazu korrespondierenden Druckeingängen 8', 8" des Druckregelmoduls 8 der stationäre Vorderachs-Druck bzw,der Rückhaltdruck p_{VA} eingespeist wird.

Bei Druckabfall im Vorderachs-Bremskreis sinkt der vom Vorderachs-Druckluftspeicher 14 an den ersten Steuereingang des 3/2-Wegeventils 104 zugeführte Druck ab, wobei die sich bezüglich des zweiten Steuereingangs ergebende Druckdifferenz zum Umschalten des 3/2-Wegeventils 104 führt so daß nunmehr der vom Hilfsspeicher 12 zugeführte Druck auf seinen Druckausgang durchgeschaltet ist und in den zugeordneten ersten Druckeingang 6' des Druckregelmoduls 6 eingespeist wird. Da auch der vom Betriebsbremsventil 15 über die Steuerdruckleitung 17 in den ersten Druckeingang des Relaisventils 102 eingesteuerte Steuerdruck p_{VA} absinkt, schaltet das Relaisventil 102 ebenfalls in den angeren Schaltzustand um, in dem der an seinem zweiten Druckeingang anstehenae Hilfsdruck auf den Druckausgang durchgeschaltet und in den zugeordneten zweiten Druckeingang 6" des Druckregelmoduls 6 eingesteuert wird. An den dazu korrespondierenden Druckeingängen 8', 8" des anderen Druckregelmoduls 8 steht demgegenüber ein gegen einen Restdruck konvergierender Vorderachsdruck bzw Rückhaltsteuerdruck p_{VA} an.

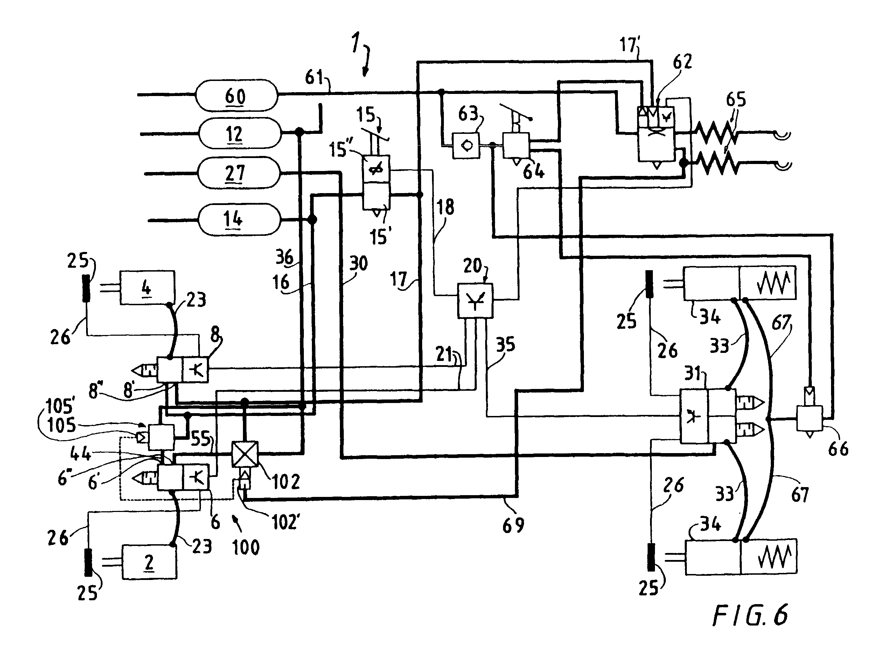

Fig. 6 zeigt eine sechste Ausführungsform der erfindungsgemäßen Umschaltventileinrichtung 100, die ein erstes und zweites Relaisventil 102, 105 umfaßt, wobei das zweite Relaisventil 105 im wesentlichen die Funktion des Wechselventils 101 gemäß der ersten Ausführungsform erfüllt. Dazu ist das erste Relaisventil 102 wie bei der ersten Ausführungsform mit seinem ersten Druckeingang an einen Zweig der Vorratsdruckleitung 17 angeschlossen, wobei ein anderer Zweig zum zweiten Druckeingang 8" des Druckregelmoduls 8 führt, und mit seinem zweiten Druckeingang an einen Zweig der Vorratsdruckleitung 36 angeschlossen; der Steueranschluß 102' ist mittels der pneumatischen Steuerdruckleitung 69 an einen Druckausgang des Anhängersteuermoduls 62 angeschlossen, während der Druckausgang des ersten Relaisventils 102 über die Leitung 55 zum zweiten Druckeingang 6" des Druckregelmoduls 6 führt. Das zweite Relaisventil 105 ist mit einer eine erste Wirkfläche bildenden Steuerkammer 105' an den Steueranschluß 102' des ersten Relaisventils 102 pneumatisch verbunden; eine der ersten Wirkfläche entgegengerichtete zweite Wirkfläche bildet einen ersten Druckeingang, der über die Vorratsdruckleitung 16 zusammen mit dem ersten Druckeingang 8' des Druckregelmoduls 8 an den Vorderachs-Druckluftspeicher 14 angeschlossen ist. Ferner weist das zweite Relaisventil 105 einen zweiten Druckeingang auf, der zusammen mit dem zweiten Druckeingang des ersten Relaisventils 102 an die zum Hilfsspeicher 12 führende Vorratsdruckleitung 36 angeschlossen ist. Der Druckausgang des zweiten Relaisventils 105 steht mit dem ersten Druckeingang 6' des Druckregelmoduls 6 in Verbindung.

Bei intaktem Vorderachs-Bremskreis wirkt sich die zwischen der ersten und zweiten Wirkfläche des zweiten Relaisventils 105 bestehende Druckdifferenz von Anhängersteuerdruck und Vorderachs-Druck zugunsten der zweiten Wirkfläche aus, so daß der zugeordnete erste Druckeingang auf den Druckausgang durchgeschaltet ist und der vom Vorderachs-Druckiuftspeicher 14 herrührende. Druck zum daran angeschlossenen ersten Druckeingang 6' des Druckregelmoduls 6 ausgesteuert wird, wobei an dem dazu korrespondierenden ersten Druckeingang 8' des anderen Druckregelmoduls 8 aufgrund der Verbindung mit der Vorratsdruckleitung 16 der stationäre Druck aus dem Vorderachs-Druckluftspeicher 14 ansteht. Demgegenüber steht am ersten Druckeingang des ersten Relaisventils 102 der vom Betriebsbremsventil 15 ausgesteuerte Steuerdruckdruck p_{VA} an, während dessen zweiter Druckeingang mit dem vom Hilfsspeicher 12 zugeführten stationären Druck beautschlagt ist; aufgrund der sich zugunsten des ersten Druckeingangs auswirkenden Druckdifferenz, die bezüglich des am Steueranschluß 102' als Referenzwert eingespeisten Anhängersteuerdrucks definiert ist, ist der erste Druckeingang des Relaisventils 102 auf dessen Druckausgang durchgeschaltet, so daß an den daran angeschlossenen zweiten Druckeingang 6" des Druckregelmoduls 6 der Steuerdruck p_{VA} des Rückhaltkreises gelangt, wobei am dazu korrespondierenden Druckeingang 8" des anderen Druckregelmoduls 8 wegen der Verbindung zur Steuerdruckleitung 17 der Steuerdruck p_{VA} des Rückhaltkreises ansteht.

Bei Druckabfall im pneumatischen Vorderachs-Bremskreis sinkt der vom Vorderachs-Druckluftspeicher 14 an den ersten Druckeingang des zweiten Relaisventils 105 und den zugeordneten Druckeingang 8' des Druckregelmoduls 8 zugeführte Druck ab. Ferner sinkt auch der vom Betriebsbremsventil 15 über die Steuerdruckleitung 17 an den ersten Druckeingang des ersten Relaisventils 102 und den zugeordneten Druckeingang 8" des Druckregelmoduls 8 eingesteuerte Druck p_{VA} des Rückhaltkreises ab. Dadurch erfolgt bei beiden Relaisventilen 102, 105 ein Umschalten, wobei an deren jeweiligen Druckausgängen der jeweils vom Hilfsspeicher 12 herrührende Hilfsdruck ausgesteuert und in die jeweils zugeorgneten Druckeingänge 6', 6" des Druckregelmoduls 6 eingesperst wird während an den dazu korrespondierenden Druckeingängen 8', 8" des anderen Druckregelmoduls 8 ein jeweils gegen einen Restwert konvergierender Vorderachs-Druck bzw Steuerdruck p_{VA} ansteht

Charakteristisch für alle vorgenannten Ausführungsformen gemäß Fig. 1 bis 6 ist mithin, daß zur pneumatischen Ansteuerung der Umschaltventileinrichtung 100 ein vom Anhangersteuermodul 62 ausgesteuerter Druck vorgesenen ist, der für den Umschaltvorgang als Referenzdruck dient und somit eine Schaltschwelle definiert. Wie die verschiedenen Ausführungsformen gemäß Fig. 1 sowie 3 bis 6 zeigen, sind die Druckausgänge der Umschaltventileinrichtung 100 an die beiden als Vorratsdruck- und Steuerdruckeingang ausgebildeten Druckeingange des dem linken Vorderrad zugeordneten Druckregelmoduls 6 angekoppelt, so daß die von dem Druckausgang dieses Druckregelmoduls ausgesteuerte Hilfsbremswirkung der Umschaltventileinrichtung 100 in den Bremszylinder des linken Vorderrades gelangt.

## Patentansprüche

1. Druckmittelbetätigte Fahrzeugbremsanlage mit wenigstens einem ersten Bremskreis und einem zweiten Bremskreis mit folgenden Merkmalen:
a) Dem ersten Bremskreis ist wenigstens ein Bremszylinder (34) zugeordnet, der über eine erste Steuerventileinrichtung (31) in Abhängigkeit von einem dem ersten Bremskreis zugeordneten Steuersignal eines Bremswertgebers (15) mit einer Druckmittelquelle (27) für den ersten Bremskreis verbindbar ist,
b) dem zweiten Bremskreis sind ein erster Bremszylinder und ein zweiter Bremszylinder zugeordnet, die über eine zweite Steuerventileinrichtung (6, 8) in Abhängigkeit von einem dem zweiten Bremskreis zugeordneten Steuersignal des Bremswertgebers (15) mit einer zweiten Druckmittelquelle (14) für den zweiten Bremskreis verbindbar sind,
c) eine zu einem dritten Bremskreis gehörende dritte Steuerventileinrichtung (62) ist mit dem Bremswertgeber (15) pneumatisch verbunden,
d) eine Umschaltventileinrichtung (100) ist vorgesehen, die von einem der dritten Steuerventileinrichtung (62) zugeordneten Steuersignal pneumatisch derart ansteuerbar ist, daß eine von der Druckmittelquelle (14) des zweiten Bremskreises unabhängige Druckmittelquelle (12) mit wenigstens einem Bremszylinder (2, 4) des zweiten Bremskreises verbindbar ist,
**dadurch gekennzeichnet, daß**
e) der Bremswertgeber (15) ein pneumatisch einkanaliger Bremswertgeber ist und daß die Umschaltventileinrichtung (100) zuströmseitig der zweiten Steuerventileinrichtung (6, 8) angeordnet ist.

2. Druckmittelbetätigte Fahrzeugbremsanlage nach Anspruch 1, **dadurch gekennzeichnet, daß** die Umschaltventileinrichtung (100) ein Wechselventil (101) sowie ein Relaisventil (102) umfaßt, wobei ein erster Druckeingang des Wechselventils (101) mit der Druckmittelquelle (14) des zweiten Bremskreises in Verbindung steht, ein zweiter Druckeingang des Wechselventils (101) mit der von der Druckmittelquelle (14) des zweiten Bremskreises unabhängigen Druckmittelquelle (12) in Verbindung steht, ein Druckausgang des Wechselventils (101) mit wenigstens einem Druckeingang (6') der zweiten Steuerventileinrichtung (6, 8) verbunden ist, ein erster Druckeingang des Relaisventils (102) an eine für das dem zweiten Bremskreis zugeordnete Steuersignal vorgesehene Steuerdruckleitung (17) angeschlossen ist und ein zweiter Druckeingang mit der unabhängigen Druckmittelquelle (12) verbunden ist, wobei das Relaisventil (102) durch ein der dritten Steuerventileinrichtung (62) zugeordnetes Steuersignal ansteuerbar und ein Druckausgang des Relaisventils (102) mit wenigstens einem Druckeingang (6") der zweiten Steuerventileinrichtung (6, 8) verbunden ist.

3. Druckmittelbetätigte Fahrzeugbremsanlage nach Anspruch 1, **dadurch gekennzeichnet, daß** die Umschaltventileinrichtung (100) ein Relaisventil (102) und ein Drucksteuerventil (103) umfaßt, wobei ein Druckeingang des Drucksteuerventils (103) mit der Druckmittelquelle (14) des zweiten Bremskreises in Verbindung steht und ein anderer Druckeingang des Drucksteuerventils (103) an eine für das dem zweiten Bremskreis zugeordnete Steuersignal vorgesehene Steuerdruckleitung (17) angeschlossen ist, während ein Druckausgang des Drucksteuerventils (103) einerseits mit einem Druckeingang (8') der zweiten Steuerventileinrichtung (6, 8) und andererseits mit dem ersten Druckeingang des Relaisventils (102) verbunden ist, und daß ein zweiter Druckeingang des Relaisventils (102) mit der von der Druckmittelquelle (14) des zweiten Bremskreises unabhängigen Druckmittelquelle (12) in Verbindung steht, wobei das Relaisventil (102) durch ein der dritten Steuerventileinrichtung (62) zugeordnetes Steuersignal ansteuerbar und ein Druckausgang des Relaisventils (102) mit einem Druckeingang (6') der zweiten Steuerventileinrichtung (6, 8) verbunden ist.

4. Druckmittelbetätigte Fahrzeugbremsanlage nach Anspruch 1, **dadurch gekennzeichnet, daß** die Umschaltventileinrichtung (100) ein Wechselventil (101) sowie ein Relaisventil (102) umfaßt, wobei ein erster Druckeingang des Wechselventils (101) mit der Druckmittelquelle (14) des zweiten Bremskreises in Verbindung steht, ein zweiter Druckeingang des Wechselventils (101) mit einem Druckausgang des Relaisventils (102) in Verbindung steht, ein Druckausgang des Wechselventils (101) mit wenigstens einem Druckeingang (6') der zweiten Steuerventileinrichtung (6, 8) verbunden ist, ein erster Druckeingang des Relaisventils (102) an eine für das dem zweiten Bremskreis zugeordnete Steuersignal vorgesehene Steuerdruckleitung (17) angeschlossen und ein zweiter Druckeingang mit der unabhängigen Druckmittelquelle (12) verbunden ist, wobei das Relaisventil (102) durch ein der dritten Steuerventileinrichtung (62) zugeordnetes Steuersignal ansteuerbar und ein Druckausgang des Relaisventils (102) mit wenigstens einem Druckeingang (6") der zweiten Steuerventileinrichtung (6, 8) verbunden ist.

5. Druckmittelbetätigte Fahrzeugbremsanlage nach Anspruch 1, **dadurch gekennzeichnet, daß** die Umschaltventileinrichtung (100) ein 3/2-Wegeventil (104) und ein Relaisventil (102) umfaßt, wobei ein erster Druckeingang des 3/2-Wegeventils (104) mit der Druckmittelquelle (14) des zweiten Bremskreises und ein zweiter Druckeingang mit der unabhangigen Druckmittelquelle (12) in Verbindung steht und in seiner Ruhestellung seinen Ausgang mit der Druckmittelquelle (14) und in seiner zweiten Stellung seinen Ausgang mit der unabhängigen Druckmittelquelle (12) verbindet, und
daß ein erster Druckeingang des Relaisventils (102) an eine für das dem zweiten Bremskreis zugeordnete Steuersignal vorgesehene Steuerdruckleitung (17) angeschlossen und ein zweiter Druckeingang mit der unabhängigen Druckmittelquelle (12) verbunden ist, wobei das Relaisventil (102) durch ein der dritten Steuerventileinrichtung (62) zugeordnetes Steuersignal ansteuerbar und ein Druckausgang des Relaisventils (102) mit wenigstens einem Druckeingang (6") der zweiten Steuerventileinrichtung (6, 8) verbunden ist.

6. Druckmittelbetätigte Fahrzeugbremsanlage nach Anspruch 5, **dadurch gekennzeichnet, daß** ein erster Steuereingang des 3/2-Wegeventils (104) mit dem ersten Druckeingang des Relaisventils (102) in Verbindung steht und ein zweiter Steuereingang von einem der dritten Steuerventileinrichtung (62) zugeordneten Steuersignal ansteuerbar ist.

7. Druckmittelbetätigte Fahrzeugbremsanlage nach Anspruch 5, **dadurch gekennzeichnet, daß** ein erster Steuereingang des 3/2-Wegeventils (104) an dessen ersten Druckeingang und ein zweiter Steuereingang an dessen zweiten Druckeingang pneumatisch angeschlossen ist.

8. Druckmittelbetätigte Fahrzeugbremsanlage nach einem der Ansprüche 5 bis 7, **dadurch gekennzeichnet, daß** das 3/2-Wegeventil (104) federbelastet ausgebildet ist.

9. Druckmittelbetätigte Fahrzeugbremsanlage nach Anspruch 1, **dadurch gekennzeichnet, daß** die Umschaltventileinrichtung (100) ein erstes und zweites Relaisventil (102, 105) umfaßt, wobei ein erster Druckeingang des zweiten Relaisventils (105) mit der Druckmittelquelle (14) des zweiten Bremskreises und ein zweiter Druckeingang mit der unabhangigen Druckmittelquelle (12) in Verbindung steht, während sein Druckausgang mit einem Druckeingang (6') der zweiten Steuerventileinrichtung (6,8) verbunden und das Relaisventil (105) durch ein der dritten Steuerventileinrichtung (62) zugeordnetes Steuersignal ansteuerbar ist, und
daß ein erster Druckeingang des ersten Relaisventils (102) an eine für das dem zweiten Bremskreis zugeordnete Steuersignal vorgesehene Steuerdruckleitung (17) angeschlossen und dessen zweier Druckeingang mit der unabhängigen Druckmittelquelle (12) verbunden ist, wobei das Relaisventil (102) durch ein der dritten Steuerventileinrichtung (62) zugeordnetes Steuersignal ansteuerbar und ein Druckausgang des Relaisventils (102) mit wenigstens einem Druckeingang (6") der zweiten Steuerventileinrichtung (6, 8) verbunden ist.

10. Druckmittelbetätigte Fahrzeugbremsanlage nach Anspruch 9, **dadurch gekennzeichnet, daß** die von der Umschaltventileinrichtung (100) umfaßten Relaisventile (102, 105) jeweils eine über eine Steuerdruckleitung (69) an die dritte Steuerventileinrichtung (62) pneumatisch angeschlossene Steuerkammer (102', 105') aufweisen.

## Claims

1. Vehicle brake system operated by a pressurised medium, comprising at least one first brake circuit and one second brake circuit, presenting the following features:
(a) at least one brake cylinder (34) is associated with said first brake circuit, adapted to be connected to a source (36) of pressurised medium for said first brake circuit via a first control valve means (31) in response to a control signal of a multi-circuit braking power generator (15), which is associated with said first brake circuit ;
(b) a first brake cylinder and a second brake cylinder are associated with said second brake circuit, which are adapted to be connected to a second source of pressurised medium (14) for said second brake circuit via a second control valve means (6, 8) in response to a control signal of said multi-circuit braking power generator (15), which is associated with said second brake circuit;
(c) a third control valve means (62) associated with a third brake circuit is pneumatically connected to said braking power generator (15);
(d) a change-over valve means (100) is provided, which is adapted to be controlled pneumatically by a control signal associated with said third control valve means (62) in such a way that a source of compressed medium (12) independent of said source of compressed medium (14) of said second brake circuit can be connected to at least one brake cylinder (2, 4) of said second brake circuit,
**characterised in that**
(e) said braking power generator (15) is a pneumatic single-channel braking power generator and that said change-over valve means (100) is arranged on the upstream side of said second control valve means (6, 8).

2. Vehicle brake system operated by a pressurised medium, according to Claim 1, **characterised in that** said change-over valve means (100) comprises a shuttle valve (101) and a relay valve (102), with a first pressure admission port of said shuttle valve (101) communicating with said source of pressurised medium (14) of said second brake circuit, that a second pressure admission port of said shuttle valve (101) communicates with said source of pressurised medium (12) independent of said source of pressurised medium (14) of said second brake circuit, that a pressure discharge port of said shuttle valve (101) is connected to at least one pressure admission port (6') of said second control valve means (6, 8), that a first pressure admission port of said relay valve (102) is connected to a pilot pressure pipe (17) provided for the control signal associated with said second brake circuit, and that a second pressure admission port is connected to said independent source of compressed medium (12), with said relay valve (102) being adapted to be controlled by a control signal associated with said third control valve means (62) and with a pressure discharge port of said relay valve (102) being connected to at least one pressure admission port (6") of said second control valve means (6, 8).

3. Vehicle brake system operated by a pressurised medium, according to Claim 1, **characterised in that** said change-over valve means (100) includes a relay valve (102) and a pressure control valve (103), wherein one pressure admission port of said pressure control valve (103) communicates with said source of pressurised medium (14) of said second brake circuit and another pressure admission port of said pressure control valve (103) is connected to a control pressure pipe (17) provided for the control signal associated with said second brake circuit, whilst one pressure discharge port of said pressure control valve (103) is connected, on the one hand, to a pressure admission port (8') of said second control valve means (6, 8) and, on the other hand, to said first pressure admission port of said relay valve (102), and that a second pressure admission port of said relay valve (102) communicates with said source of pressurised medium (12) independent of said source of pressurised medium (14) of said second brake circuit, wherein said relay valve (102) is adapted to b e controlled by a control signal associated with said third control valve means (62) and wherein one pressure discharge port of said relay valve (102) is connected to a pressure admission port (6') of said second control valve means (6, 8).

4. Vehicle brake system operated by a pressurised medium, according to Claim 1, **characterised in that** said change-over valve means (100) comprises a shuttle valve (101) as well as a relay valve (102), wherein one first pressure admission port of said shuttle valve (101) communicates with said source of pressurised medium (14) of said second brake circuit, a second pressure admission port of said shuttle valve (101) is connected to at least one pressure admission port (6') of said second control valve means (6, 8), a first pressure admission port of said relay valve (102) is connected to a pilot pressure pipe (17) provided for the control signal associated with said second brake circuit, and a second pressure admission port is connected to said independent source of pressurised medium (12), with said relay valve (102) being adapted to be controlled by a control signal associated with said third control valve means (62) and with one pressure discharge port of said relay valve (102) being connected to at least one pressure admission port (6") of said second control valve means (6, 8).

5. Vehicle brake system operated by a pressurised medium, according to Claim 1, **characterised in that** said change-over valve means (100) comprises a 3/2-way valve (104) and a relay valve (102), wherein one first pressure admission port of said 3/2-way valve (104) communicates with said source of pressurised medium (14) of said second brake circuit and a second pressure admission port communicates with said independent source of pressurised medium (12) and connects, in its inactive p osition, its d ischarge p ort to s aid s ource o f pressurised medium (14) and, in its second position, its output to said independent source of pressurised medium (12), and
that a first pressure admission port of said relay valve (102) is connected to a pilot pressure pipe (17) provided for the control signal associated with said second brake circuit and a second pressure admission port is connected to said independent source of pressurised medium (12), wherein said relay valve (102) is adapted to be controlled by a control signal associated with said third control valve means (62) and a pressure discharge port of said relay valve (102) is connected to at least one pressure admission port (6") of said second control valve means (6, 8).

6. Vehicle brake system operated by a pressurised medium, according to Claim 5, **characterised in that** a first pressure admission port of said 3/2-way valve (104) communicates with said first pressure admission port of said relay valve (102) and a second control input is adapted to be controlled by a control signal associated with said third control valve means (62).

7. Vehicle brake system operated by a pressurised medium, according to Claim 5, **characterised in that** a first control input of said 3/2-way valve (104) is pneumatically connected to its first pressure admission port and that a second control input is pneumatically connected to its second pressure admission port.

8. Vehicle brake system operated by a pressurised medium, according to any of the Claims 5 to 7, **characterised in that** said 3/2-way valve (104) presents a spring-biased configuration.

9. Vehicle brake system operated by a pressurised medium, according to Claim 1, **characterised in that** said change-over valve means (100) comprises a first and a second relay valve (102, 105), wherein a first pressure admission port of said second relay valve (105) communicates with said source of pressurised medium (14) of said second brake circuit and a second pressure admission port communicates with said independent source of pressurised medium (12), whilst its pressure discharge port is connected to a pressure admission port (6') of said second control valve means (6, 8) and said relay valve (1045) is adapted to be controlled by a control signal associated with said third control valve means (62), and
that a first pressure admission port of said first relay valve (102) is connected to a pilot pressure pipe ( 18) provided for the control signal associated with said second brake circuit and its second pressure admission port is connected to said independent source of pressurised medium (12), wherein said relay valve (102) is adapted to be controlled by a control signal associated with said third control valve means (62) and a pressure discharge port of said relay valve (102) is connected to at least one pressure admission port (6") of said second control valve means (6, 8).

10. Vehicle brake system operated by a pressurised medium, according to Claim 9, **characterised in that** each of said relay valves (102, 105) comprised in said change-over valve means (100) comprises a respective control chamber (102', 105') pneumatically connected via a pilot pressure pipe (69) to said third control valve means (62).

## Revendications

1. Système de freinage de véhicule actionné par fluide sous pression, comportant au moins un premier circuit de freinage et un deuxième circuit de freinage, ayant les caractéristiques suivantes :
a) au moins un cylindre (34) de frein est associé au premier circuit de freinage, cylindre qui, par l'intermédiaire d'un premier organe (31) formant distributeur de commande, peut être relié à une source (27) de fluide sous pression pour le premier circuit de freinage en fonction d'un signal de commande, associé au premier circuit de freinage, d'un transmetteur (15) de valeur de freinage,
b) un premier cylindre de frein et un deuxième cylindre de frein sont associés au deuxième circuit de freinage, cylindres qui, par l'intermédiaire d'un deuxième organe (6, 8) formant distributeur de commande, peuvent être reliés à une deuxième source (14) de fluide sous pression pour le deuxième circuit de freinage en fonction d'un signal de commande, associé au deuxième circuit de freinage, du transmetteur (15) de valeur de freinage,
c) un troisième organe (62) formant distributeur de commande, faisant partie d'un troisième circuit de freinage, est relié pneumatiquement au transmetteur (15) de valeur de freinage,
d) il est prévu un organe (100) formant distributeur de commutation qui peut être asservi pneumatiquement, par un signal de commande associé au troisième organe (62) formant distributeur de commande, de telle sorte qu'une source (12) de fluide sous pression indépendante de la source (14) de fluide sous pression du deuxième circuit de freinage peut être reliée à au moins un cylindre (2, 4) de frein du deuxième circuit de freinage,
**caractérisé en ce que**
e) le transmetteur (15) de valeur de freinage est un transmetteur de valeur de freinage à un seul canal pneumatique, et **en ce que** l'organe (100) formant distributeur de commutation est disposé du côté du flux entrant du deuxième organe (6, 8) formant distributeur de commande.

2. Système de freinage de véhicule actionné par fluide sous pression suivant la revendication 1, **caractérisé en ce que** l'organe (100) formant distributeur de commutation comprend une vanne (101) à deux voies ainsi qu'une vanne-relais (102), une première entrée de pression de la vanne (101) à deux voies étant reliée à la source (14) de fluide sous pression du deuxième circuit de freinage, une deuxième entrée de pression de la vanne (101) à deux voies étant reliée à la source (12) de fluide sous pression indépendante de la source (14) de fluide sous pression du deuxième circuit de freinage, une sortie de pression de la vanne (101) à deux voies étant reliée à au moins une entrée (6') de pression du deuxième organe (6, 8) formant distributeur de commande, une première entrée de pression de la vanne-relais (102) étant raccordée à une conduite (17) de pression de commande prévue pour le signal de commande associé au deuxième circuit de freinage et une deuxième entrée de pression étant reliée à la source (12) de fluide sous pression indépendante, la vanne-relais (102) pouvant être asservie par un signal de commande associé au troisième organe (62) formant distributeur de commande et une sortie de pression de la vanne-relais (102) étant reliée à au moins une entrée (6") de pression du deuxième organe (6, 8) formant distributeur de commande.

3. Système de freinage de véhicule actionné par fluide sous pression suivant la revendication 1, **caractérisé en ce que** l'organe (100) formant distributeur de commutation comprend une vanne-relais (102) et une vanne (103) de commande de pression, une entrée de pression de la vanne (103) de commande de pression étant reliée à la source (14) de fluide sous pression du deuxième circuit de freinage et une autre entrée de pression de la vanne (103) de commande de pression étant raccordée à une conduite (17) de pression de commande prévue pour le signal de commande associé au deuxième circuit de freinage, tandis qu'une sortie de pression de la vanne (103) de commande de pression est reliée d'une part à une entrée (8') de pression du deuxième organe (6, 8) formant distributeur de commande et d'autre part à la première entrée de pression de la vanne-relais (102), et **en ce qu'**une deuxième entrée de pression de la vanne-relais (102) est reliée à la source (12) de fluide sous pression indépendante de la source (14) de fluide sous pression du deuxième circuit de freinage, la vanne-relais (102) pouvant être asservie par un signal de commande associé au troisième organe (62) formant distributeur de commande et une sortie de pression de la vanne-relais (102) étant reliée à une entrée (6') de pression du deuxième organe (6, 8) formant distributeur de commande.

4. Système de freinage de véhicule actionné par fluide sous pression suivant la revendication 1, **caractérisé en ce que** l'organe (100) formant distributeur de commutation comprend une vanne (101) à deux voies ainsi qu'une vanne-relais (102), une première entrée de pression de la vanne (101) à deux voies étant reliée à la source (14) de fluide sous pression du deuxième circuit de freinage, une deuxième entrée de pression de la vanne (101) à deux voies étant reliée à une sortie de pression de la vanne-relais (102), une sortie de pression de la vanne (101) à deux voies étant reliée à au moins une entrée (6') de pression du deuxième organe (6, 8) formant distributeur de commande, une première entrée de pression de la vanne-relais (102) étant raccordée à une conduite (17) de pression de commande prévue pour le signal de commande associé au deuxième circuit de freinage et une deuxième entrée de pression étant reliée à la source (12) de fluide sous pression indépendante, la vanne-relais (102) pouvant être asservie par un signal de commande associé au troisième organe (62) formant distributeur de commande et une sortie de pression de la vanne-relais (102) étant reliée à au moins une entrée (6") de pression du deuxième organe (6, 8) formant distributeur de commande.

5. Système de freinage de véhicule actionné par fluide sous pression suivant la revendication 1, **caractérisé en ce que** l'organe (100) formant distributeur de commutation comprend un distributeur (104) 3/2 voies et une vanne-relais (102), une première entrée de pression du distributeur (104) 3/2 voies étant reliée à la source (14) de fluide sous pression du deuxième circuit de freinage et une deuxième entrée de pression à la source (12) de fluide sous pression indépendante, et reliant dans sa position de repos sa sortie à la source (14) de fluide sous pression et dans sa deuxième position sa sortie à la source (12) de fluide sous pression indépendante,
et **en ce qu'**une première entrée de pression de la vanne-relais (102) est raccordée à une conduite (17) de pression de commande prévue pour le signal de commande associé au deuxième circuit de freinage et une deuxième entrée de pression est reliée à la source (12) de fluide sous pression indépendante, la vanne-relais (102) pouvant être asservie par un signal de commande associé au troisième organe (62) formant distributeur de commande et une sortie de pression de la vanne-relais (102) étant reliée à au moins une entrée (6") de pression du deuxième organe (6, 8) formant distributeur de commande.

6. Système de freinage de véhicule actionné par fluide sous pression suivant la revendication 5, **caractérisé en ce qu'**une première entrée de commande du distributeur (104) 3/2 voies est reliée à la première entrée de pression de la vanne-relais (102) et une deuxième entrée de commande peut être asservie par un signal de commande associé au troisième organe (62) formant distributeur de commande.

7. Système de freinage de véhicule actionné par fluide sous pression suivant la revendication 5, **caractérisé en ce qu'**une première entrée de commande du distributeur (104) 3/2 voies est raccordée pneumatiquement à sa première entrée de pression et une deuxième entrée de commande à sa deuxième entrée de pression.

8. Système de freinage de véhicule actionné par fluide sous pression suivant l'une des revendications 5 à 7, **caractérisé en ce que** le distributeur (104) 3/2 voies est conçu sollicité par ressort.

9. Système de freinage de véhicule actionné par fluide sous pression suivant la revendication 1, **caractérisé en ce que** l'organe (100) formant distributeur de commutation comprend des première et deuxième vanne-relais (102, 105), une première entrée de pression de la deuxième vanne-relais (105) étant reliée à la source (14) de fluide sous pression du deuxième circuit de freinage et une deuxième entrée de pression à la source (12) de fluide sous pression indépendante, tandis que sa sortie de pression est reliée à une entrée (6') de pression du deuxième organe (6, 8) formant distributeur de commande, et la vanne-relais (105) pouvant être asservie par un signal de commande associé au troisième organe (62) formant distributeur de commande,
et **en ce qu'**une première entrée de pression de la première vanne-relais (102) est raccordée à une conduite (17) de pression de commande prévue pour le signal de commande associé au deuxième circuit de freinage et sa deuxième entrée de pression est reliée à la source (12) de fluide sous pression indépendante, la vanne-relais (102) pouvant être asservie par un signal de commande associé au troisième organe (62) formant distributeur de commande et une sortie de pression de la vanne-relais (102) étant reliée à au moins une entrée (6") de pression du deuxième organe (6, 8) formant distributeur de commande.

10. Système de freinage de véhicule actionné par fluide sous pression suivant la revendication 9, **caractérisé en ce que** les vannes-relais (102, 105) que comprend l'organe (100) formant distributeur de commutation possèdent respectivement une chambre (102', 105') de commande raccordée pneumatiquement au troisième organe (62) formant distributeur de commande par l'intermédiaire d'une conduite (69) de pression de commande.
